# EUROPÄISCHE PATENTANMELDUNG

(11) **EP 2 436 712 A1**
(43) Veröffentlichungstag der Anmeldung: **04.04.2012**
(21) Anmeldenummer: 10186073.2
(22) Anmeldetag: 01.10.2010
(51) Int. Cl.: C08G 18/10, C08G 18/48, B32B 27/38, B32B 27/40, C08L 63/00, C08L 63/02

(54) **Schlagzähigkeitsmodifikatoren für Epoxidharzzusammensetzungen**

(71) Anmelder: Sika Technology AG, 6340 Baar (CH)
(72) Erfinder: Frick, Karsten, 5453, Remetschwil (CH); Finter, Jürgen, 8037, Zürich (CH); Gerber, Ulrich, 8142, Uitikon-Waldegg (CH); Krueger, Christian, 8952, Schlieren (CH)
(74) Vertreter: Dux, Roland

(57) **Zusammenfassung**

Die vorliegende Erfindung betrifft neuartige Schlagzähigkeitsmodifikatoren für Epoxidharzzusammensetzungen. Sie zeichnen sich insbesondere dadurch aus, dass sie zu ausgehärteten Epoxidharzzusammensetzungen mit erhöhter Glasübergangstemperatur sowie hoher Festigkeit führen. Insbesondere führen sie auch zu ausgeprägter Tieftemperaturschlagzähigkeitserhöhung.

## Beschreibung

### Technisches Gebiet

Die vorliegende Erfindung betrifft das Gebiet der Schlagzähigkeitsmodifikatoren sowie das Gebiet von schlagzähen Epoxidharzzusammensetzungen.

### Stand der Technik

Polymere werden seit langem als Werkstoffe eingesetzt. Gewisse Polymere weisen jedoch das Problem auf, dass bei schlagartiger Schlagbeanspruchung die Polymermatrix bricht, d.h. dass ihre Schlagzähigkeit gering ist. Insbesondere Polymermatrices basierend auf Epoxidharzen sind zwar sehr fest sind aber vielfach nicht sehr schlagzäh. Deshalb wurde schon länger versucht, die Schlagzähigkeit mit Hilfe diverser Schlagzähigkeitsmodifikatoren zu verbessern.

Dies wurde beispielsweise in EP-A-0 308 664 mit der Verwendung von speziellen Umsetzungsprodukten eines in Epoxidharzen löslichen oder dispergierbaren elastomeren Prepolymeren mit endständigen Isocyanatgruppen mit einem Polyphenol oder Aminophenol versucht. Es zeigte sich jedoch, dass diese Umsetzungsprodukte aufgrund der eingesetzten Menge von Polyphenolen eine grosse Menge an unumgesetzten Polyphenolen aufweisen, und dies sich vor allem nachteilig auf die Mechanik auswirkt. Es hat sich zudem gezeigt, dass mittels des Einsatzes derartiger Schlagzähigkeitsmodifikatoren zu erniedrigten Glasübergangstemperaturen (Tg) sowie verringerter Langzeitalterung führt.

Weiterhin wurde schon seit langem versucht, die Schlagzähigkeit durch den Zusatz von speziellen Copolymeren, welche als sogenannte Flüssigkautschuke bezeichnet werden, zu erhöhen. Durch die Verwendung von chemisch reaktiven Gruppen, wie Hydroxyl-, Carboxyl-, Vinyl- oder Amino-Gruppen sind derartige Flüssigkautschuke chemisch in die Matrix einbaubar. So existieren beispielsweise seit langem reaktive Flüssigkautschuke Butadien/Acrylonitil-Copolymere, welche mit Hydroxyl-, Carboxyl-, Vinyl- oder Amino-Gruppen terminiert sind, welche von der Firma B.F. Goodrich, beziehungsweise Noveon, unter dem Handelsnamen Hycar® angeboten wurden und nun unter dem neuen Handelsnamen Hypro™ von Nanoresins AG, Deutschland, bzw. Emerald Performance Materials LLC erhältlich sind. Es zeigte sich auch hier, dass die Glasübergangstemperatur durch diese Flüssigkautschuke nachteilig beeinflusst wird.

Eine hohe Glasübergangstemperatur ist jedoch für viele Anwendungen insbesondere bei Verklebungen, welche hohen Temperaturen ausgesetzt sind, notwendig. Weiterhin ist eine verringerte Glasübergangstemperatur auch nachteilig bei Verklebungen, welche unter Dauerlast stehen, weil sie dann -auch bei Temperaturen weit unter der Glasübergangstemperatur- zum Kriechen neigen und deshalb langfristig zu einem Versagen des Verbundes führen.

### Darstellung der Erfindung

Aufgabe der vorliegenden Erfindung ist es daher, die Schwächen des Standes der Technik zu überwinden und insbesondere neue Schlagzähigkeitsmodifikatoren zur Verfügung zu stellen, die einerseits sowohl bei Raumtemperatur als auch bei tiefen Temperaturen sehr effizient die Schlagzähigkeit des Epoxidharzklebstoffes erhöhen, und andererseits zu erhöhten Glasübergangstemperaturen der durch Hitze ausgehärteten Epoxidharzzusammensetzungen führen.

Es hat sich überraschenderweise gezeigt, dass Schlagzähigkeitsmodifikatoren gemäss der Ansprüche 1 und 4 diese Probleme in unerwarteter Art und Weise lösen.

Die Schlagzähigkeitsmodifikatoren lassen sich in einfacher Art und Weise herstellen und sind breit einsetzbar. Insbesondere lässt sich der Epoxidgruppen aufweisende Schlagzähigkeitsmodifikator gemäss Anspruch 4 durch einfache Weiterreaktion aus Schlagzähigkeitsmodifikatoren gemäss Anspruch 1 herstellen.

Es hat sich weiterhin als besonders vorteilhaft gezeigt, wenn die erfindungsgemässen Schlagzähigkeitsmodifikatoren in Kombination mit weiteren Schlagzähigkeitsmodifikatoren, insbesondere mit bekannten Butadien/Acrylonitil-Copolymeren bzw. deren Reaktionsprodukten mit Diglycidylethern eingesetzt werden.

Es hat sich weiterhin in sehr überraschender Art und Weise gezeigt, dass die erfindungsgemässen Schlagzähigkeitsmodifikatoren insbesondere bei tiefen Temperaturen (z.B. -30 C) zu erstaunlich hohen Schlagzähigkeiten führen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt einen Schlagzähigkeitsmodifikator der Formel (I) 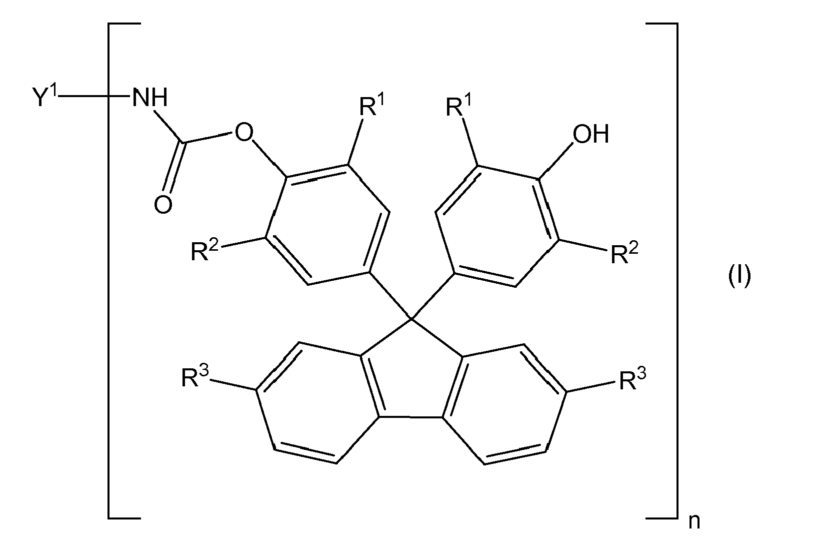 wobei
Y¹ für einen n-wertigen Rest eines mit Isocyanatgruppen terminierten linearen oder verzweigten Polyurethanpolymeren **(PU1)** nach dem Entfernen der endständigen Isocyanatgruppen steht;
R¹ je für H oder eine Alkylgruppe mit 1 bis 6 C-Atomen steht;
R² je für H oder eine Alkylgruppe mit 1 bis 6 C-Atomen steht;
R³ je für H oder eine Alkylgruppe mit 1 bis 6 C-Atomen steht; sowie n = 2 oder 3 oder 4 ist.

Unter einem "Schlagzähigkeitsmodifikator" wird in diesem Dokument ein Zusatz zu einer Epoxidharzmatrix verstanden, der bereits bei geringen

Zuschlägen von 0.1 - 50 Gew.-%, insbesondere von 0.5 - 40 Gew.-%, eine deutliche Zunahme der Zähigkeit bewirkt und somit in der Lage ist, höhere Schlag- oder Stossbeanspruchung aufzunehmen, bevor die Matrix einreisst oder bricht. Ein Mass für die Wirksamkeit als Schlagzähigkeitsmodifikator bietet Schlagschälarbeit, bzw. die Bruchenergie, wie sie aus Messungen gemäss ISO 11343 bestimmt werden können.

Die gestrichelten Linien in den Formeln dieses Dokumentes stellen jeweils die Bindung zwischen dem jeweiligen Substituenten und dem dazugehörigen Molekülrest dar.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide (Houben-Weyl, "Methoden der organischen Chemie", Thieme Verlag, Stuttgart, 1987, Band E20, Seite 1561).

Mit "Poly" beginnende Substanznamen wie Polyamin, Polyol, Polyisocyanat, Polymerkaptane oder Polyglycidylether bezeichnen im vorliegenden Dokument Substanzen, die formal zwei oder mehr der in ihrem Namen vorkommenden funktionellen Gruppen pro Molekül enthalten.

Der Begriff "Molekulargewicht" bezeichnet im vorliegenden Dokument das Molekulargewichtsmittel Mₙ.

Als Raumtemperatur wird im vorliegenden Dokument eine Temperatur von 25°C verstanden.

Die fett markierten Bezeichnungen wie **PU1, Q_{PM}, Q_{PP}, A, B, K1, K2, B-1, SM, SM1, SM2, SM3, SM4, CTBN, F, G** oder dergleichen im vorliegenden Dokument dienen lediglich für das bessere Leseverständnis und Identifizierung.

Bevorzugt stehen R¹ und/oder R² und/oder R³ für H. Als besonders bevorzugt gilt, wenn R¹ = R² = R³= H ist.

Das Polyurethanpolymer (**PU1**), auf dem Y¹ basiert-das heisst das Polyurethanpolymer der Formel Y¹[NCO]ₙ - lässt sich aus mindestens einem Polyisocyanat, insbesondere einem Diisocyanat oder Triisocyanat, sowie aus mindestens einem Polymeren **(Q_{PM})** mit endständigen Amino-, Thiol- oder Hydroxylgruppen und / oder aus einem, gegebenenfalls substituierten, Polyphenol **(Q_{PP})** herstellen.

Geeignete Diisocyanate oder Triisocyanate sind beispielsweise aliphatische, cycloaliphatische, aromatische oder araliphatische Diisocyanate oder Triisocyanate.

Als aromatische Diisocyanate oder Triisocyanate eignen sich beispielsweise monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, sowie beliebige Mischungen der vorgenannten Isocyanate. Bevorzugt sind MDI und TDI.

Als aliphatische Diisocyanate oder Triisocyanate eignen eignen sich beispielsweise monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3-und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, sowie beliebige Mischungen der vorgenannten Isocyanate. Bevorzugt sind HDI und IPDI.

Als Polyisocyanat geeignet ist in einer weiteren Ausführungsform ein Polyisocyanat in der Form eines monomeren Di- oder Triisocyanates oder eines Oligomeren eines monomeren Diisocyanates, wobei als monomeres Di- oder Triisocyanat beispielsweise die vorgenannten aromatischen und aliphatischen Di-und Triisocyanate geeignet sind. Als Oligomer eines monomeren Diisocyanates geeignet sind insbesondere die Oligomere von HDI, IPDI und TDI. Solche Oligomere stellen in der Praxis üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen. Bevorzugt weisen sie einen niedrigen Gehalt an monomeren Diisocyanaten auf. Kommerziell erhältliche Typen sind insbesondere HDI-Biurete, beispielsweise Desmodur^{®} N 100 und Desmodur^{®} N 3200 (von Bayer), Tolonate^{®} HDB und Tolonate^{®} HDB-LV (von Rhodia) sowie Duranate^{®} 24A-1 00 (von Asahi Kasei); HDI-Isocyanurate, beispielsweise Desmodur^{®} N 3300, Desmodur^{®} N 3600 und Desmodur^{®} N 3790 BA (von Bayer), Tolonate^{®} HDT, Tolonate^{®} HDT-LV und Tolonate^{®} HDT-LV2 (von Rhodia), Duranate^{®} TPA-1 00 und Duranate^{®} THA-1 00 (von Asahi Kasei) sowie Coronate^{®} HX (von Nippon Polyurethane); HDI-Uretdione, beispielsweise Desmodur^{®} N 3400 (von Bayer); HDI-Iminooxadiazindione, beispielsweise Desmodur^{®} XP 2410 (von Bayer); HDI-Allophanate, beispielsweise Desmodur^{®} VP LS 2102 (von Bayer); IPDI-Isocyanurate, beispielsweise Desmodur^{®} Z 4470 (von Bayer) und Vestanat^{®} T1890/100 (von Evonik); TDI-Oligomere, beispielsweise Desmodur^{®} IL (von Bayer); sowie gemischte Isocyanurate auf Basis TDI / HDI, zum Beispiel Desmodur^{®} HL (von Bayer).

Als Polymere mit endständigen Amino-, Thiol- oder Hydroxylgruppen **(Q_{PM})** sind insbesondere Polymere **(Q_{PM})** mit zwei oder drei endständigen Amino-, Thiol- oder Hydroxylgruppen geeignet.

Als derartige geeignete Polymere **(Q_{PM})** gelten insbesondere diejenigen, wie sie beispielsweise in WO 2008/049857 A1, insbesondere als Polymere **Q_{PM}** auf Seite 7, Zeile 25 bis Seite 11, Zeile 20, deren Inhalt hiermit insbesondere durch Bezugnahme eingeschlossen wird, offenbart sind.

Die Polymere mit endständigen Amino-, Thiol- oder Hydroxylgruppen **(Q_{PM})** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere mit endständigen Amino-, Thiol- oder Hydroxylgruppen **(Q_{PM})** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Weiterhin besonders geeignet als Polymere mit endständigen Amino-, Thiol- oder Hydroxylgruppen **(Q_{PM})** haben sich amphiphile Blockcopolymere, welche mindestens eine Hydroxylgruppe aufweisen, insbesondere solche, wie sie unter dem Handelsnamen Fortegra™, insbesondere Fortegra™ 100, von Dow Chemical, vertrieben werden, erwiesen.

Vorteilhaft sind diese Polymere **(Q_{PM})** di- oder höherfunktioneller Polyole mit OH-Equivalentsgewichten von 300 bis 6'000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Als Polymere mit endständigen Amino-, Thiol- oder Hydroxylgruppen **(Q_{PM})** meist bevorzugt Polytetramethylenetherglykol (PTMEG), auch Polytetrahydrofuran genannt. Derartige Polytetramethylenetherglykole sind kommerziell bei BASF unter dem Handelsnamen PolyTHF® erhältlich. Besonders bevorzugt sind Polytetramethylenetherglykole mit einem Molekulargewicht zwischen 1500 und 2500 g/mol.

Als Polyphenol **(Q_{PP})** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenebis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolacke mit ―OH-Funktionalität von 2.0 bis 3.5 sowie alle Isomeren der vorgenannten Verbindungen.

In einer Ausführungsform ist das Polyphenol **(Q_{PP})** ein Bisphenol der Formel (IV), welches im Detail weiter hinten in diesem Dokument beschrieben wird.

Das Polyurethanpolymer **(PU1)**, auf dem Y¹ basiert, ist ein Polymer. Insbesondere weist der Rest Y¹ ein Molekulargewicht zwischen 2'000 und 10'000 g/mol auf. Ist das Molekulargewicht kleiner als 2000 g/mol ist die Wirkungsweise als Schlagzähigkeitsmodifikator nur geringfügig ausgeprägt, ist das Molekulargewicht grösser als 10'000 g/mol, insbesondere grösser als 25'000 g/mol, ist der Schlagzähigkeitsmodifikator sehr hoch viskos, was vor allem zu Problemen in dessen Verarbeitbarkeit führt.

Bevorzugt wird das Polyurethanpolymer **(PU1)** der Formel Y¹[NCO]ₙ aus HDI und Polytetramethylenetherglykol, insbesondere mit einem Molekulargewicht zwischen 1700 und 2100 g/mol, hergestellt.

In einer ersten Ausführungsform wird das Polyurethanpolymer **(PU1)** aus mindestens einem Diisocyanat oder Triisocyanat sowie aus einem Polymeren mit endständigen Amino-, Thiol- oder Hydroxylgruppen **(Q_{PM})** hergestellt. Die Herstellung des Polyurethanpolymers **(PU1)** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **(Q_{PM})** eingesetzt wird.

In einer zweiten Ausführungsform wird das Polyurethanpolymer **(PU1)** aus mindestens einem Diisocyanat oder Triisocyanat sowie aus einem Polymeren **(Q_{PM})** mit endständigen Amino-, Thiol- oder Hydroxylgruppen sowie aus einem, gegebenenfalls substituierten, Polyphenol **(Q_{PP})** hergestellt. Zur Herstellung des Polyurethanpolymers **(PU1)** aus mindestens einem Diisocyanat oder Triisocyanat sowie aus einem Polymeren **(Q_{PM})** mit endständigen Amino-, Thiol- oder Hydroxylgruppen und / oder aus einem, gegebenenfalls substituierten, Polyphenol **(Q_{PP})** stehen unterschiedliche Möglichkeiten zur Verfügung.

In einem ersten Verfahren, "Eintopfverfahren" genannt, wird eine Mischung von mindestens einem Polyphenol **(Q_{PP})** und mindestens einem Polymeren **(Q_{PM})** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **(Q_{PP})** mit mindestens einem Diisocyanat oder Triisocyanat in einem Isocyanatüberschuss und anschliessend mit mindestens einem Polymeren **(Q_{PP})** in Unterschuss umgesetzt.

Im dritten Verfahren schliesslich, "2-Schrittverfahren II" genannt, wird mindestens ein Polymer **(Q_{PM})** mit mindestens einem Diisocyanat oder Triisocyanat in einem Isocyanatüberschuss und anschliessend mit mindestens einem Polyphenol **(Q_{PP})** in Unterschuss umgesetzt.

Die drei Verfahren führen zu Isocyanat-terminierten Polyurethanpolymeren **(PU1)**, die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanpolymeren **(PU1)** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM}**) bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **(Q_{PM})**, das Polyphenol **(Q_{PP})** das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanpolymer **(PU1)** weist bevorzugt elastischen Charakter auf und zeigt eine Glasumwandlungstemperatur Tg von kleiner als 0°C.

Der Schlagzähigkeitsmodifikator der Formel (I) kann in einem Verfahren hergestellt werden, bei dem ein mit n Isocyanatgruppen terminiertes lineares oder verzweigtes Polyurethanpolymer **(PU1)** der Formel Y¹[NCO]ₙ mit einem Bisphenol der Formel (IV) in einem Verhältnis der Anzahl phenolischen Gruppen zu Anzahl NCO-Gruppen von 2 oder grösser als 2, insbesondere zwischen 2 und 2.5, umgesetzt wird.

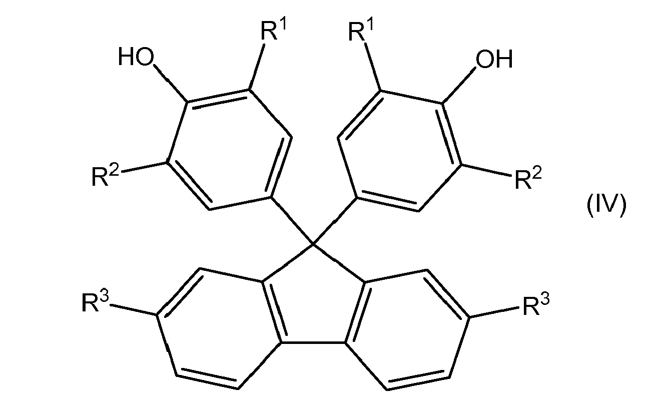

Bisphenole der Formel (IV) sind grundsätzlich bekannt. Die Herstellung ist beispielsweise US 5,304,688 A offenbart, deren Inhalt hiermit durch Referenz vollumfänglich miteingeschlossen wird.

Als Bisphenol der Formel (IV) ist besonders geeignet ein Bisphenol, welches ausgewählt ist aus der Gruppe bestehend aus 4,4'-(2,7-diethyl-9H-fluorene-9,9-diyl)bis(2,6-diethylphenol), 4,4'-(2,7-diethyl-9H-fluorene-9,9-diyl)bis-(2,6-diisopropylphenol), 4,4'-(2,7-diethyl-9H-fluorene-9,9-diyl)bis(2,6-di-tert-butylphenol), 4,4'-(2,7-diethyl-9H-fluorene-9,9-diyl)bis(2-ethyl-6-isopropylphenol), 4,4'-(2,7-diethyl-9H-fluorene-9,9-diyl)bis(2-ethylphenol), 4,4'-(2,7-diethyl-9H-fluorene-9,9-diyl)bis(2-methylphenol), 4,4'-(2,7-diethyl-9H-fluorene-9,9-diyl)diphenol, 4,4'-(2,7-dimethyl-9H-fluorene-9,9-diyl)bis(2,6-diisopropylphenol), 4,4'-(2,7-dimethyl-9H-fluorene-9,9-diyl)bis(2,6-dimethylphenol), 4,4'-(2,7-dimethyl-9H-fluorene-9,9-diyl)bis(2,6-di-tert-butylphenol), 4,4'-(2,7-dimethyl-9H-fluorene-9,9-diyl)bis(2-ethylphenol), 4,4'-(2,7-dimethyl-9H-fluorene-9,9-diyl)bis(2-methylphenol), 4,4'-(2,7-dimethyl-9H-fluorene-9,9-diyl)bis(2-tert-butylphenol), 4,4'-(2,7-dimethyl-9H-fluorene-9,9-diyl)diphenol, 4,4'-(9H-fluorene-9,9-diyl)bis(2,6-diethylphenol), 4,4'-(9H-fluorene-9,9-diyl)bis(2,6-diisopropylphenol), 4,4'-(9H-fluorene-9,9-diyl)bis(2,6-dimethylphenol), 4,4'-(9H-fluorene-9,9-diyl)bis(2,6-di-tert-butylphenol), 4,4'-(9H-fluorene-9,9-diyl)bis(2-cyclohexylphenol), 4,4'-(9H-fluorene-9,9-diyl)bis(2-ethylphenol), 4,4'-(9H-fluorene-9,9-diyl)bis(2-methylphenol), 4,4'-(9H-fluorene-9,9-diyl)bis(2-tert-butylphenol) and 4,4'-(9H-fluorene-9,9-diyl)diphenol.

Bevorzugtes Bisphenol der Formel (IV) ist 4,4'-(9H-fluorene-9,9-diyl)diphenol (=4,4'-(9H-Fluoren-9-yliden)bisphenol = 9,9-Bis(4-hydroxyphenyl)fluoren)).

In einem weiteren Aspekt betrifft die vorliegende Erfindung auch Epoxidgruppen aufweisende Schlagzähigkeitsmodifikatoren der Formel (II).

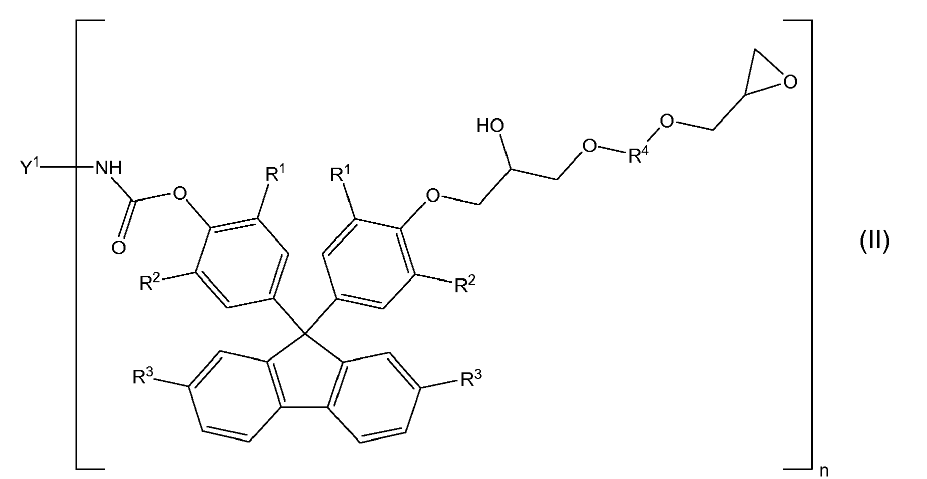

Hierbei steht R⁴ steht für einen zweiwertigen aliphatischen oder einkernigen aromatischen oder einen zweikernigen aromatischen Rest.

Die Reste Y¹, R¹, R², R³ sowie der Index n wurden bereits vorgängig für den Schlagzähigkeitsmodifikator der Formel (I) definiert und deren bevorzugten Ausführungsformen im Detail erörtert.

Als besonders bevorzugt gilt, dass der Rest R⁴ die Formel (III) aufweist 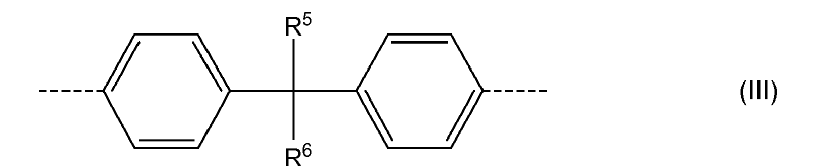 wobei R⁵ und R⁶ je unabhängig von einander für H oder eine Methyl- oder eine Ethyl- oder eine Phenylgruppe stehen.

Die Epoxidgruppen aufweisende Schlagzähigkeitsmodifikatoren der Formel (II) lassen sich in einfacher Art und Weise aus einem Schlagzähigkeitsmodifikator der Formel (I) durch Umsetzung mit einem Digylcidylether erhalten. Somit stellt der Schlagzähigkeitsmodifikator der Formel (I) ein Zwischenprodukt für den Epoxidgruppen aufweisenden Schlagzähigkeitsmodifikator der Formel (11) dar.

Konkret erfolgt die Herstellung des Epoxidgruppen aufweisenden Schlagzähigkeitsmodifikator der Formel (11) durch ein Verfahren, in welchem ein Schlagzähigkeitsmodifikator der Formel (I), wie er vorgängig im Detail beschreiben wurde, mit einem Diglycidylether der Formel (V) in einem Verhältnis der Anzahl Glycidyl-Gruppen zu Anzahl phenolischer Gruppen von 2 oder grösser als 2, insbesondere zwischen 2 und 10, bevorzugt zwischen 2.1 und 8, umgesetzt wird.

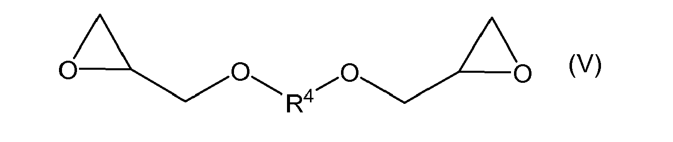

Als Diglycidylether der Formel (V) gelten insbesondere
- Diglycidylether von difunktionellen gesättigten oder ungesättigten, verzweigten oder unverzweigten, zyklischen oder offenkettigen C₂ - C₃₀ Alkolen, wie beispielsweise Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie beispielsweise Polyethylenglycol-diglycidylether, Polypropyleneglycol-diglycidylether;
- Diglycidylether von difunktionellen Diphenolen, wie sie bereits für die Polyphenole **(Q_{PP})** vorgängig besprochen wurden.

Besonders bevorzugt als Diglycidylether der Formel (V) sind sogenannte Epoxid-Flüssigharze der Formel (A-I) und Epoxid-Festharze der Formel (A-II).

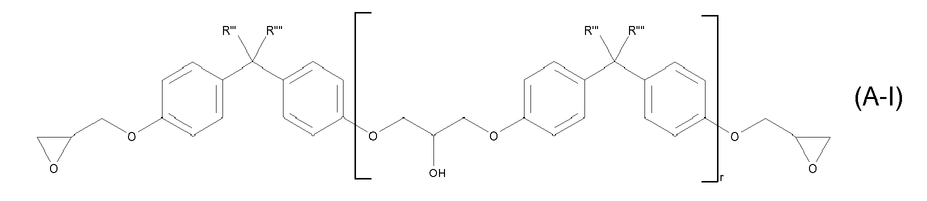

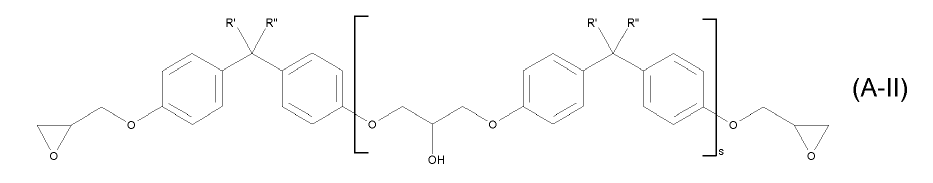

Hierbei stehen die Substituenten R'" und R"" unabhängig voneinander entweder für H oder CH₃.

Weiterhin steht der Index r für einen Wert von 0 bis 1. Bevorzugt steht r für einen Wert von kleiner als 0.2.

Weiterhin steht der Index s für einen Wert von >1, insbesondere > 1.5, insbesondere von 2 bis 12.

Der Term "unabhängig voneinander" in der Definition von Gruppen und Resten bedeutet in diesem Dokument jeweils, dass mehrere vorkommende aber in den Formeln gleich bezeichnete Gruppen jeweils unterschiedliche Bedeutungen aufweisen können.

Verbindungen der Formel (A-II) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt als sind jedoch Epoxid-Festharze im engeren Sinn, d.h. wo der Index s einen Wert von > 1.5 aufweist.

Derartige Epoxid-Festharze sind kommerziell erhältlich beispielsweise von Dow oder Huntsman oder Hexion. Solche Epoxid-Flüssigharze sind beispielsweise als Araldite® GY 250, Araldite® PY 304, Araldite® GY 282 (Huntsman, bzw. Hexion) oder D.E.R.™ 331 oder D.E.R.™ 330 (Dow) oder D.E.R.™ 332 (Dow) oder Epikote 828 (Hexion) erhältlich.

Bevorzugt handelt es beim Diglycidylether der Formel (V) um einen Epoxid-Flüssigharz, insbesondere um einen Diglycidylether von Bisphenol-A (DGEBA), von Bisphenol-F sowie von Bisphenol-A/F.

In einer Ausführungsform ist der Diglycidylether der Formel (V) ein mit einem Bisphenol, insbesondere ein Bisphenol der Formel (IV), verlängerter Diglycidylether, wie sie gerade vorgängig beschrieben wurden. Eine derartige Verlängerung erfolgt insbesondere, wenn ein Diglycidylether, insbesondere ein Diglycidylether von Bisphenol-A (DGEBA) oder von Bisphenol-F mit einem Bisphenol bei erhöhter Temperatur umgesetzt werden. Es ist vorteilhaft, dass ein derartiger Bisphenol-verlängerter Diglycidylether mit nicht verlängertem Diglycidylether eingesetzt wird.

Die Umsetzung zwischen Schlagzähigkeitsmodifikator der Formel (I) und dem Diglycidylether der Formel (V) bei Temperaturen über 100°C, insbesondere bei Temperaturen zwischen 110 und 200°C.

Sowohl die Schlagzähigkeitsmodifikatoren der Formel (I) als auch die Epoxidgruppen aufweisenden Schlagzähigkeitsmodifikatoren der Formel (II) sind bei Raumtemperatur typischerweise flüssig. Sie sind insbesondere hochviskos, aber immer noch fliessfähig. Es hat sich gezeigt, dass sie insbesondere honigartiges Fliessverhalten aufweisen.

Es hat sich weiterhin gezeigt, dass sowohl die Schlagzähigkeitsmodifikatoren der Formel (I) als auch die Epoxidgruppen aufweisenden Schlagzähigkeitsmodifikatoren der Formel (II) als Schlagzähigkeitsmodifikator wirksam sind, d.h. sie bewirken als Zusatz zu einer Epoxidharzmatrix bereits bei geringen Zuschlägen von 0.1 - 50 Gew.-%, insbesondere von 0.5 - 40 Gew.-%, eine deutliche Zunahme der Zähigkeit.

Somit betrifft die vorliegende Erfindung auch die Verwendung eines Schlagzähigkeitsmodifikators der Formel (I) oder (II) zur Erhöhung der Schlagzähigkeit einer Epoxidharzmatrix.

Somit stellt in einem weiteren Aspekt der vorliegenden Erfindung eine Zusammensetzung dar, welche umfasst:
- mindestens ein Epoxid-Flüssigharz oder Epoxid-Festharz **(A)**;
- mindestens ein Schlagzähigkeitsmodifikator der Formel (I) oder (11)
- mindestens einen Härter **(B)** für Epoxidharze.

Als Epoxid-Flüssigharz oder Epoxid-Festharz **(A)** gelten insbesondere die bereits vorgängig als für den Diglycidylether der Formel (V) geeignet beschriebenen Epoxid-Flüssigharze oder Epoxid-Festharze.

Meist bevorzugt als Epoxid-Flüssigharz oder Epoxid-Festharz **(A)** sind Epoxid-Flüssigharz, insbesondere Diglycidylether von Bisphenol-A (DGEBA), von Bisphenol-F sowie von Bisphenol-A/F.

Der Anteil an Epoxidharzes **(A)** beträgt vorzugsweise 10 - 85 Gew.-%, insbesondere 15 - 70 Gew.-%, bevorzugt 15 - 60 Gew.-%, am Gewicht der Zusammensetzung.

Der Anteil an Schlagzähigkeitsmodifikator der Formel (I) oder (11) beträgt vorzugsweise 1 - 45 Gew.-%, insbesondere 3 - 35 Gew.-%, am Gewicht der Zusammensetzung.

Als Härter **(B)** für Epoxidharze gelten in einer Ausführungsform insbesondere Polyamine, Polymerkaptane, Polyamidoamine, Aminofunktionelle Polyamin/Polyepoxid-Addukte, wie sie dem Fachmann als Härter bestens bekannt sind. In dieser Ausführungsform stellt die Zusammensetzung eine zweikomponentige Epoxidharzzusammensetzung dar, welche aus zwei Komponenten, d.h. einer ersten Komponente **(K1)** und einer zweiten Komponente **(K2)** besteht. Die erste Komponente **(K1)** umfasst zumindest das Epoxid-Flüssigharz oder Epoxid-Festharz **(A)** sowie den Schlagzähigkeitsmodifikator der Formel (I) oder (II). Die zweite Komponente **(K2)** umfasst zumindest einen Härter **(B)** für Epoxidharze. Die erste Komponente **(K1)** und die zweite Komponente **(K2)** werden je in einem individuellen Behälter aufbewahrt. Erst beim Zeitpunkt des erwünschten Gebrauchs werden die zwei Komponenten miteinander gemischt und die reaktiven Bestandteile reagieren miteinander und führen so zu einer Vernetzung der Zusammensetzung. Derartige zweikomponentige Epoxidharzzusammensetzungen sind bereits bei tiefen Temperaturen, typischerweise zwischen 0° bis 100°C, insbesondere bei Raumtemperatur, aushärtbar. In dieser Ausführungsform erfolgt die Härtung durch eine Additionsreaktion zwischen Härter und der in der Zusammensetzung vorhanden Epoxidgruppen aufweisenden Verbindungen. Somit ist es in dieser Ausführungsform besonders vorteilhaft, wenn die Menge des Härters in der gesamten Zusammensetzung so bemessen ist, dass die Epoxid-reaktiven Gruppen in einem stöchiometrischen Verhältnis zu den Epoxid-Gruppen stehen.

In einer weiteren und bevorzugten Ausführungsform stellt der Härter **(B)** für Epoxidharze ein Härter **(B-1)** für Epoxidharze dar, welcher durch erhöhte Temperatur aktiviert wird, dar. In dieser Ausführungsform stellt die Zusammensetzung eine hitzehärtende Epoxidharzzusammensetzung dar.

Unter "erhöhter Temperatur" wird in diesem Dokument eine Temperatur über 100°C, insbesondere zwischen 110°C und 200°C, verstanden.

Beim Härter **(B-1)** für Epoxidharze, welcher durch erhöhte Temperatur aktiviert wird, handelt es sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole, wie 2-Isopropylimidazol oder 2-Hydroxy-N-(2-(2-(2-hydroxyphenyl)-4,5-dihydroimidazol-1-yl)ethyl)benzamid und Amin-Komplexe eingesetzt werden.

Bevorzugt handelt es sich beim Härter **B-1** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B-1** ist Dicyandiamid.

Vorteilhaft beträgt der Gesamtanteil des Härters **(B-1)** für Epoxidharze, welcher durch erhöhte Temperatur aktiviert wird, 0.5 - 12 Gewichts-%, vorzugsweise 1 - 8 Gewichts-%, bezogen auf das Gewicht der gesamten Zusammensetzung.

Bevorzugt ist, dass die Zusammensetzung weiterhin mindestens einen Schlagzähigkeitsmodifikator **(SM)** umfasst, welcher verschieden von den bereits beschriebenen Schlagzähigkeitsmodifikatoren, d.h. Schlagzähigkeitsmodifikatoren der Formel (I) oder (II), ist.

Die zusätzlichen Schlagzähigkeitsmodifikatoren **(SM)** können fest oder flüssig sein.

In einer Ausführungsform ist dieser Schlagzähigkeitsmodifikatoren **(SM)** ein Flüssigkautschuk **(SM1)**, welcher ein carboxyl- oder epoxidterminiertes Acrylnitril/Butadien-Copolymer oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Schlagzähigkeitsmodifikator **(SM)** ein Polyacrylatflüssigkautschuk **(SM1)**, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl-oder epoxidterminiertes Acrylnitril/Butadien-Copolymeren oder Derivaten davon mit epoxidterminierten Polyurethanprepolymeren.

In einer weiteren Ausführungsform ist der Schlagzähigkeitsmodifikator **(SM)** ein fester Schlagzähigkeitsmodifikator, welcher ein organisches lonen-getauschtes Schichtmineral ist.

Das lonen-getauschte Schichtmineral kann entweder ein Kationen-getauschtes Schichtmineral oder ein Anionen-getauschtes Schichtmineral sein.

Das Kationen-getauschte Schichtmineral wird hierbei erhalten aus einem Schichtmineral, bei welchem zumindest ein Teil der Kationen durch organische

Kationen ausgetauscht worden sind. Beispiele für derartige Kationen-getauschte Schichtmineralien sind insbesondere diejenigen, welche in US 5,707,439 oder in US 6,197,849 erwähnt sind. Ebenso ist dort das Verfahren zur Herstellung dieser Kationen-getauschten Schichtminerale beschrieben. Bevorzugt als Schichtmineral ist ein Schichtsilikat. Insbesondere bevorzugt handelt es sich beim Schichtmineral um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral wie Kaolinit oder ein Montmorillionit oder ein Hectorit oder ein Illit gezeigt.

Zumindest ein Teil der Kationen des Schichtminerals wird durch organische Kationen ersetzt. Beispiele für derartige Kationen sind n-Octylammonium, Trimethyldodecylammonium, Dimethyldodecylammonium oder Bis(hydroxyethyl)-octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das Anionen-getauschte Schichtmineral wird hierbei erhalten aus einem Schichtmineral, bei welchem zumindest ein Teil der Anionen durch organische Anionen ausgetauscht worden sind. Ein Beispiel für ein derartig Anionen-getauschtes Schichtmineral ist ein Hydrotalcit, bei dem zumindest ein Teil der Carbonat-Anionen der Zwischenschichten durch organische Anionen ausgetauscht wurden.

Es ist durchaus auch möglich, dass die Zusammensetzung gleichzeitig ein Kationen-getauschtes Schichtmineral und ein Anionen-getauschtes Schichtmineral enthält.

In einer weiteren Ausführungsform ist der Schlagzähigkeitsmodifikator **(SM)** ein fester Schlagzähigkeitsmodifikator, welcher ein Blockcopolymer **(SM2)**, ist. Das Blockcopolymer **(SM2)** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere **(SM2)** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Schlagzähigkeitsmodifikator **(SM)** ein Core-Shell Polymer **(SM3)**. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-35 1™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur™ von Nanoresins AG, Deutschland, angeboten.

Ebenso geeignet sind nanosklaige Silikate in Epoxid-Matiix, wie sie unter dem Handelnamen Nonopox von Nanoresins AG, Deutschland, angeboten werden.

In einer weiteren Ausführungsform ist der Schlagzähigkeitsmodifikator **(SM)** ein Umsetzungsprodukt **(SM4)** eines carboxylierten festen Nitrilkautschuks mit überschüssigem Epoxidharz.

Besonders geeignet als in der Zusammensetzung gegebenenfalls vorhandenem Schlagzähigkeitsmodifikator **(SM)** sind jene, wie sie in den folgenden Artikel bzw. Patentschriften, deren Inhalt hiermit durch Referenz miteingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylat-terminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11 bis Zeile 20; EP 1 728 825 A1, insbesondere Formel (I), besonders Seite 3, Zeile 21 bis Seite 4 bis Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die ambiphilen Blockcopolymere, besonders Seite 3339, 2. Spalte bis 3341 2.Spalte; WO 2004/055092 A1, insbesondere Formel (I), besonders Seite 7, Zeile 28 bis Seite 13 bis Zeile 15;. WO 2005/007720 A1, insbesondere Formel (I), besonders Seite 8, Zeile 1 bis Seite 17 bis Zeile 10; WO 2007/020266 A1, insbesondere Formel (I), besonders Seite 3, Zeile 1 bis Seite 11 bis Zeile 6, US 2009/0264558 A1, insbesondere Formel (I), US 2009/0288766 A1, insbesondere Formel (I) und (II), US 2010/0009196 A1, insbesondere Formel (I), US 2010/0035041 A1, insbesondere Formel (I), US 2010/0087588 A1, insbesondere Formel (I), (II) und (XI), US 2010/0048828 A1, insbesondere Formel (I), (II) und (XI), US 2010/0184924 A1, insbesondere Formel (I), (II) und (XI), US 2010/0087567 A1, insbesondere Formel (I), WO 2010/007150 A1, insbesondere Formel (I), sowie DE-A-2 123 033, US 2008/0076886 A1, WO 2008/016889 und WO 2007/025007.

Es hat sich gezeigt, dass in der Zusammensetzung vorteilhaft mehrere Schlagzähigkeitsmodifikator vorhanden sind, insbesondere auch mehrere Schlagzähigkeitsmodifikatoren **(SM).**

Als besonders vorteilhaft hat sich gezeigt, dass ein derartiger weiterer Schlagzähigkeitsmodifikator **(SM)** ein Epoxidgruppenden aufweisender Schlagzähigkeitsmodifikator der Formel (VI) ist.

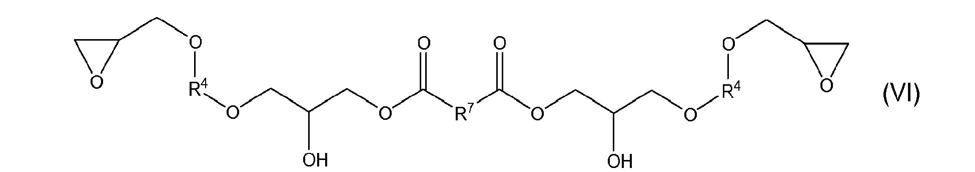

Hierbei steht R⁷ für einen zweiwertigen Rest eines Carboxylgruppen-terminierten Butadien/Acrylonitril-Copolymers (CTBN) nach Entfernung der terminalen Carboxylgruppen. Der Rest R⁴ wurde bereits vorgängig definiert und beschrieben.

Insbesondere steht R⁷ für einen Rest, wie er durch formelle Entfernung der Carboxyl-Gruppen eines unter dem Namen Hypro® CTBN von Noveon kommerziell vertriebenen Carboxylgruppen-terminierten Butadien/Acrylonitril-Copolymers **CTBN**, erhalten wird. Bevorzugt R⁷ für einen zweiwertigen Rest der Formel (VI').

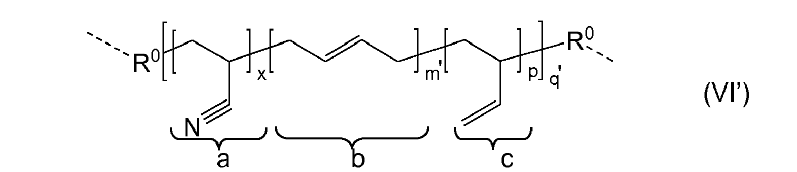

R⁰ steht hierbei für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnende Ausführungsform stellt der Substituent R⁰ einen Rest der Formel (VI-a) dar.

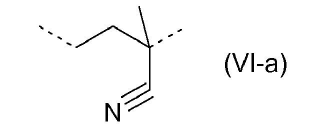

Weiterhin steht der Index q' für einen Wert zwischen 40 und 100, insbesondere zwischen 50 und 90. Weiterhin stellen die Bezeichnungen b und c die Strukturelemente, welche von Butadien stammen und a das Strukturelement, welches von Acrylonitril stammt, dar. Die Indices x, m', und p' stellen ihrerseits Werte dar, die das Verhältnis der Strukturelement a, b und c zueinander beschreiben. Der Index x steht für Werte von 0.05 - 0.3, der Index m' für Werte von 0.5 - 0.8, der Index p für Werte von 0.1 - 0.2 mit der Voraussetzung, dass die Summe von x, m' und p gleich 1 ist.

Dem Fachmann ist klar, dass die in Formel (VI') gezeigte Struktur als vereinfachte Darstellung zu verstehen sind. Somit können die Bausteine a, b und c jeweils zufällig, abwechselnd oder blockweise zueinander angeordnet sein. Insbesondere stellt somit Formel (VI') nicht zwangsläufig ein Triblock-Copolymer dar.

Die Herstellung des Schlagzähigkeitsmodifikator der Formel (VI) erfolgt durch die Umsetzung eines Carboxylgruppen-terminierten Butadien/Acrylonitril-Copolymers **(CTBN)** insbesondere der Formel (VII), mit einem Diglycidylether der Formel (V) in einem stöchiometrischen Überschuss des Diglycidylethers, d.h. dass das Verhältnis der Glycidylether-Gruppen zu COOH-Gruppen 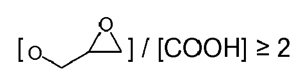 ist.

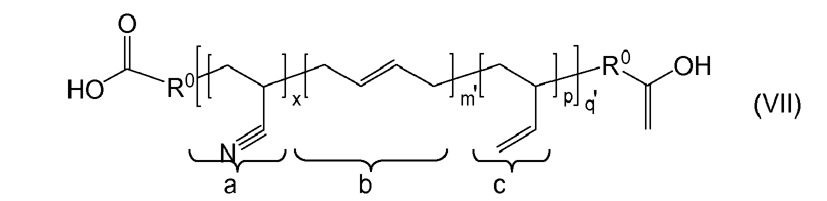

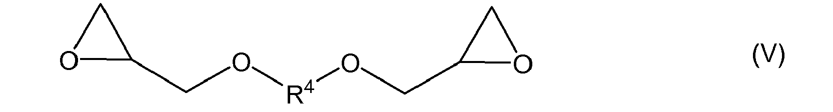

Bei dieser Umsetzung erfolgt eine Esterbildung. Derartige Umsetzungen von Epoxiden, bzw. Glycidylethern, mit Carbonsäuren sind dem Fachmann bekannt sowie die Reaktionsbedingungen hierfür. Insbesondere werden höhere Temperaturen, typischerweise bei Temperaturen von 100°C, bevorzugt um 140°C, und gegebenenfalls Katalysatoren eingesetzt und vorzugsweise unter Schutzgas. Beispiele für derartige Katalysatoren für die Esterbildung sind Triphenylphosphin, tertiäre Amine, quaternäre Phosphoniumsalze oder quaternäre Ammoniumsalze.

Es hat sich gezeigt, dass es vorteilhaft ist, mehrere Schlagzähigkeitsmodifikatoren **(SM)** kombiniert einzusetzen.

In einer besonders bevorzugten Ausführungsform erfolgt die Herstellung des Epoxidgruppen aufweisenden Schlagzähigkeitsmodifikators der Formel (II) und des Epoxidgruppenden aufweisenden Schlagzähigkeitsmodifikators der Formel (VI) gleichzeitig miteinander. Hierbei wird in einem ersten Schritt ein Schlagzähigkeitsmodifikator der Formel (I), wie vorgängig beschrieben hergestellt, anschliessend wird in einem weiteren Schritt das Carboxylgruppenterminierte Butadien/Acrylonitril-Copolymers **(CTBN),** allenfalls eine geringe Menge Bisphenol der Formel (IV), und der Diglycidylether der Formel (V) zugegeben. Anschliessend erfolgt vorzugsweise die Zugabe eines Katalysators für die Esterbildung. Die Umsetzung erfolgt durch Aufheizen der Reaktionsmischung. Falls noch Bisphenol der Formel (IV) zugegeben wird, wird zusätzlich zu dem Epoxidgruppen aufweisenden Schlagzähigkeitsmodifikator der Formel (II) und dem Epoxidgruppenden aufweisenden Schlagzähigkeitsmodifikator der Formel (VI) im Wesentlichen auch noch ein Bisphenol-verlängerter Diglycidylether in situ gebildet, wie es bereits bei der Diskussion des Diglycidylethers der Formel (V) beschrieben wurde. Dies ist besonders vorteilhaft.

Es ist dem Fachmann klar, dass in einer derartigen Eintopfreaktion auch noch andere Reaktionsprodukte gebildet werden. Die Art und Menge derartiger Nebenprodukte kann insbesondere über die Stöchiometrie beeinflusst werden. Bevorzugt wird diese so gewählt, dass die Menge dieser im vorherigen Abschnitt besprochenen Reaktionsprodukte möglichst gross ist.

Der Anteil des vorgängig beschriebenen von Schlagzähigkeitsmodifikator der Formel (I) oder (II) verschiedenen Schlagzähigkeitsmodifikators **(SM)** beträgt vorzugsweise 1 - 45 Gew.-%, insbesondere 3 - 35 Gew.-%, am Gewicht der Zusammensetzung.

Es hat sich gezeigt, dass es vorteilhaft ist, mehrere Schlagzähigkeitsmodifikatoren **(SM)** kombiniert einzusetzen.

Es ist weiterhin bevorzugt, dass die Menge an

Schlagzähigkeitsmodifikator(en) der Formel (I) oder (II) grösser als die Menge an weiteren von Schlagzähigkeitsmodifikator(en) der Formel (I) oder (II) verschiedenen Schlagzähigkeitsmodifikator(en) **(SM)** ist.

Die Zusammensetzung kann selbstverständlich noch andere Bestandteile umfassen. Insbesondere sind dies Füllstoff (F), Epoxidgruppen-tragende Reaktivverdünner **(G)** sowie Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler umfassen.

Bei den Füllstoffen **(F)** handelt es sich hierbei bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **(F)** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **(F)** 3 - 50 Gewichts-%, vorzugsweise 5 - 35 Gewichts-%, insbesondere 5 - 25 Gewichts-%, bezogen auf das Gewicht der gesamten Zusammensetzung.

Bei den Epoxidgruppen-tragenden Reaktivverdünnern **(G)** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **(G)** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonders bevorzugten Ausführungsform enthält die Zusammensetzung weiterhin mindestens ein physikalisches oder chemisches Treibmittel, insbesondere in einer Menge von 0.1 - 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C ein Gas freisetzen.

Es kann sich hierbei um exotherme Treibmittel handeln, wie beispielsweise Azoverbindungungen, Hydrazinderivate, Semicarbazide oder Tetrazole handeln. Bevorzugt sind Azodicarbonamid und Oxy-bis (Benzenesulfonyl-hydrazid), die bei der Zersetzung Energie freisetzen. Weiterhin geeignet sind auch endotherme Treibmittel, wie beispielsweise Natriumbicarbonat/Zitronensäure - Mischungen. Derartige chemische Treibmittel sind beispielsweise unter dem Namen Celogen™ der Firma Chemtura erhältlich. Ebenfalls geeignet sind physikalische Treib¬mittel, wie sie unter dem Handelsnamen ExpanCel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

In einer Ausführungsform, nämlich der zweikomponentige Epoxidharzzusammensetzung, erfolgt nach dem Mischen der ersten Komponente **(K1)** und der zweiten Komponente **(K2)** eine Reaktion, welches zum Aushärten der Zusammensetzung führt. Somit betrifft die vorliegende Erfindung auch eine ausgehärtete Zusammensetzung, welche aus einer Zusammensetzung vorgängig durch Mischen des Härters **(B)** für Epoxidharze mit dem Epoxid-Flüssigharz oder Epoxid-Festharz **(A)** und dem Schlagzähigkeitsmodifikator erhalten wird.

In einer weiteren Ausführungsform, nämlich der hitzehärtende Epoxidharzzusammensetzung, erfolgt die Aushärtung durch Erhitzen der Zusammensetzung auf eine Temperatur, welche über der Hitzeaktivierung des thermisch aktivierbaren Härters **(B-1)** liegt. Diese Temperatur Aushärtetemperatur ist vorzugsweise eine Temperatur von 100 - 220 °C, vorzugsweise 120 - 200°C.

Die Zusammensetzung eignet sich bestens als Klebstoff und werden zum Verkleben von mindestens zwei Substraten verwendet.

Somit betrifft die vorliegende Erfindung in einem weiteren Aspekt einen Verbundkörper dar. Dieser Verbundkörper wird in einer ersten Ausführungsform erhalten aus einem Verkleben von mindestens zwei Substraten mittels einer gemischten Zusammensetzung, wobei die gemischte Zusammensetzung ihrerseits durch Mischung des Härters **(B)** für Epoxidharze mit dem Epoxid-Flüssigharz oder Epoxid-Festharz **(A)** und dem Schlagzähigkeitsmodifikator, wie vorgängig beschrieben erhalten wurde.

Der Verbundkörper wird in einer zweiten Ausführungsform erhalten aus einem Verkleben von mindestens zwei Substraten einer Zusammensetzung, wie vorgängig beschrieben, und einem Erhitzen der Zusammensetzung auf eine Temperatur, welche über der Hitzeaktivierung des thermisch aktivierbaren Härters **(B-1)** liegt.

Derartige Verbundkörper sind insbesondere Automobile oder An- oder Einbaumodule für Fahrzeuge. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen

Die beschriebenen Zusammensetzungen zeichnen sich nach Aushärtung durch eine hohe Schlagzähigkeit sowie eine Glasübergangstemperatur von mehr als 100°C, insbesondere von mehr als 120°C, bisweilen sogar von mehr als 130°C, aus.

Es hat sich gezeigt, dass sich die beschriebenen Zusammensetzungen besonders als Klebstoffe eignen. Ein derartiger Klebstoff weist breite Einsatzmöglichkeiten auf. Insbesondere sind hiermit Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Im Falle des bevorzugten Einsatzes als hitzehärtender einkomponentiger Klebstoff eignet sich die Zusammensetzung auch für das Verkleben von hitzestabilen Materialien. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Es hat sich gezeigt, dass sowohl bei Raumtemperatur als auch bei tiefen Temperaturen, insbesondere bei -30°C, sehr hohe Bruchenergien erreicht werden können. So sind Bruchenergien (*BE*) (für Details zur Messung wird auf den Teil "Beispiele" verwiesen) bei Raumtemperaturen von mehr als 15 J, zuweilen von mehr als 17 J, und bei -30° von mehr als 10 J, zuweilen von mehr als 11 J, zugänglich. Diese sehr gute Tieftemperaturschlagzähigkeit ist umso erstaunlicher, als dass üblicherweise eine Erhöhung der Glasübergangstemperatur der ausgehärteten Epoxidharzzusammensetzung einhergeht mit einer Erniedrigung der Tieftemperaturschalgzähigkeit.

Eine besonders bevorzugte Verwendung der erfindungsgemässen hitzehärtenden Epoxidharzzusammensetzung ist dessen Verwendung als hitzehärtender Rohbauklebstoff im Fahrzeugbau.

### Beispiele

### Herstellung eines Beispiels eines Schlagzähigkeitsmodifikator der Formel (I) (Bsip.1)

110.0 g PolyTHF®2000 (BASF) und 20.8 g Hexamethylenediisocyanat (HDI) wurden zusammen mit 0.05 g Dibutylzinndilaurat (DBTL) in einem Gefäss gemischt. Nach dem Mischen bei 60°C unter Vakuum wurde ein NCO-Gehalt von 4.1 % gemessen. Zu dem so gebildeten NCO-terminierten Polyurethapolymer wurde 35.4 g 4,4'-(9H-Fluoren-9-yliden)bisphenol (Aldrich) zugegeben und bei 135°C unter Vakuum weitergerührt, bis kein NCO mehr messbar war.

### Herstellung einer Eintopfsynthese von beispielhaftem Schlagzähigkeitsmodifikator der Formel (II) und einem beispielhaftem Schlagzähigkeitsmodifikator der Formel (VI) sowie Bisphenol-verlängertem Digylcidylether: (Bsp.2)

Zu 160 g des Schlagzähigkeitsmodifikators (Bsp.***1***) wurden 80 g Hypro™CTBNX 1300x18 (Emerald Performance Materials) und 20 g 4,4'-(9H-Fluoren-9-yliden)bisphenol (Aldrich) sowie 360 g Epoxid-Flüssigharz D.E.R. 332 (Dow) zugegeben und unter Vakuum bei 135°C gerührt, bis sich das 4,4'-(9H-Fluoren-9-yliden)bisphenol vollständig gelöst hatte. Anschliessend wurde auf 120°C abgekühlt und ein Epoxidgehalt von 3.28 eq/kg gemessen. Nun wurde 0.12 g Triphenylphosphin zugegeben und unter Rühren zur Reaktion gebracht, bis ein Epoxidgehalt von 3.1 eq/kg gemessen wurde. Es resultierte ein viskoses klares gelbliches Harz.

### Herstellung einer Schlagzähigkeitsmodifikator enthaltenden Zusammensetzung

Es wurden die Klebstoffzusammensetzung ***Z1*** gemäss Tabelle 1 wie folgt hergestellt:
In einem Planetenmischer werden alle Komponenten ausser Dicyandiamid vorgelegt und bei 90 - 100°C im Vakuum eine Stunde gerührt, dann wird Dicyandiamid zugeben und nach weiteren 10 Minuten Rühren in Kartuschen abgefüllt.

### Prüfmethoden:

### Zugfestigkeit (ZF) (DIN EN ISO 527)

Eine Probe der Zusammensetzung wurde zwischen zwei Teflonpapieren auf eine Schichtdicke von 2 mm verpresst. Anschliessend wurde die Zusammensetzung während 20 Minuten, resp. 30 Minuten, bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.

Die Zugfestigkeit *("ZF₂₀^{,} _{180°C}",* bzw. *"ZF₃₀^{,} _{180°C}")* wurde gemäss DIN EN ISO 527 bestimmt.

### Schlagschälarbeit (ISO 11343)

Die Probekörper wurden aus der beschriebenen Zusammensetzung und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3mm. Gehärtet wurde 30 Min. bei 180°C. Die Messung der Schlagschälarbeit erfolgte jeweils bei Raumtemperatur und bei minus 30°C. Die Schlaggeschwindigkeit betrug 2 m/s. Als Bruchenergie (*BE*) in Joule wird die Fläche unter der Messkurve (von 25% bis 90%, gemäss ISO 11343) angegeben.

Die Resultate dieser Prüfungen wurden in Tabelle 1 angegeben.

**Tabelle 1. Zusammensetzung und Resultate.**

| | ***Z1*** |
|---|---|
| D.E.R. 332 (Epoxid-Flüssigharz, Dow) [g] | 27.0 |
| Polypox R7 (tert-Butylphenyl-glycidylether, UPPC) [g] | 18.0 |
| 2 [g] | 168.0 |
| Harnstoffbeschleuniger [g] | 0.54 |
| Dicyandiamid [g] | 11.9 |
| Füllstoffmischung [g] | 74.7 |
| | |
| *ZF_{20' 180°C}* [MPa] | 32.6 |
| *ZF_{30' 180°C}* [M Pa] | 33.6 |
| *BE* bei 23°C [J] | 17.9 |
| *BE* bei -30°C [J] | 11.5 |

## Patentansprüche

1. Schlagzähigkeitsmodifikator der Formel (I) 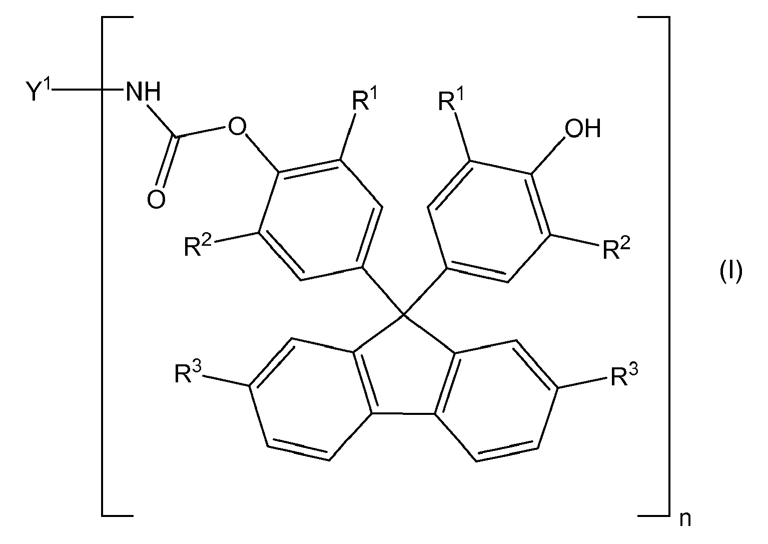 wobei
Y¹ für einen n-wertigen Rest eines mit Isocyanatgruppen terminierten linearen oder verzweigten Polyurethanpolymeren **(PU1)** nach dem Entfernen der endständigen Isocyanatgruppen steht;
R¹ je für H oder eine Alkylgruppe mit 1 bis 6 C-Atomen steht;
R² je für H oder eine Alkylgruppe mit 1 bis 6 C-Atomen steht;
R³ je für H oder eine Alkylgruppe mit 1 bis 6 C-Atomen steht; sowie n = 2, 3 oder 4 ist.

2. Schlagzähigkeitsmodifikator gemäss Anspruch 1, **dadurch gekennzeichnet, dass** R¹ = R² = R³ = H ist.

3. Schlagzähigkeitsmodifikator gemäss Anspruch 1 oder 2, **dadurch gekennzeichnet, dass** der Rest Y¹ ein Molekulargewicht zwischen 2'000 und 10'000 g/mol aufweist.

4. Epoxidgruppen aufweisender Schlagzähigkeitsmodifikator der Formel (II) 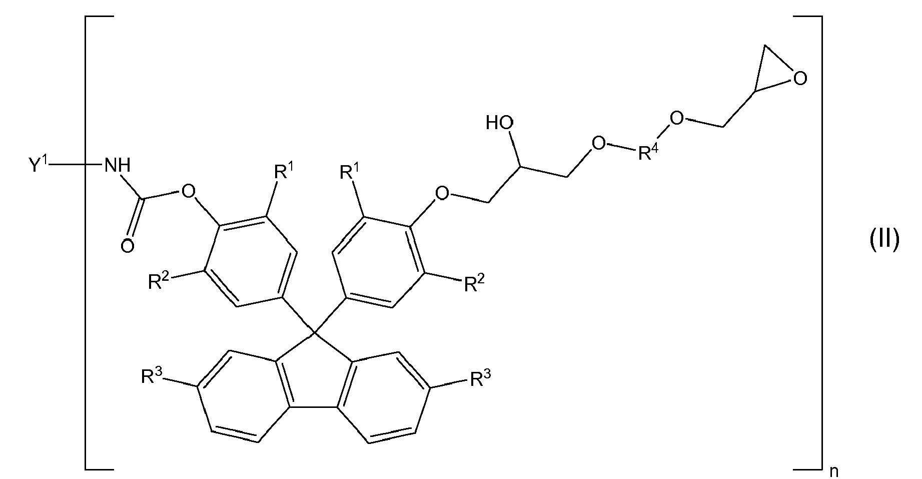 wobei
Y¹ für einen n-wertigen Rest eines mit Isocyanatgruppen terminierten linearen oder verzweigten Polyurethanpolymeren **PU1** nach dem Entfernen der endständigen Isocyanatgruppen steht;
R¹ je für H oder eine Alkylgruppe mit 1 bis 6 C-Atomen steht;
R² je für H oder eine Alkylgruppe mit 1 bis 6 C-Atomen steht;
R³ je für H oder eine Alkylgruppe mit 1 bis 6 C-Atomen steht;
R⁴ für einen zweiwertigen aliphatischen oder einkernigen aromatischen oder einen zweikernigen aromatischen Rest steht; und n = 2, 3 oder 4 ist.

5. Epoxidgruppen aufweisender Schlagzähigkeitsmodifikator gemäss Anspruch 4, **dadurch gekennzeichnet, dass** R⁴ die Formel (III) aufweist 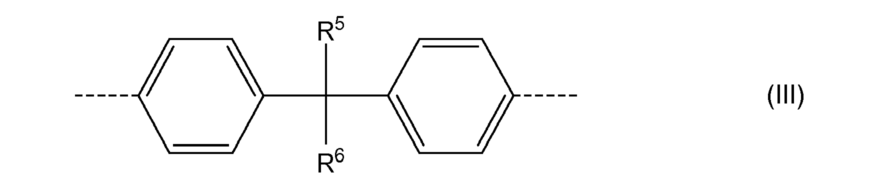 wobei R⁵ und R⁶ je unabhängig von einander für H oder eine Methyl- oder eine Ethyl- oder eine Phenylgruppe stehen.

6. Epoxidgruppen aufweisender Schlagzähigkeitsmodifikator gemäss Anspruch 4 oder 5, **dadurch gekennzeichnet, dass** R¹ = R² = R³ = H ist.

7. Verfahren der Herstellung eines Schlagzähigkeitsmodifikators gemäss einem der Ansprüche 1 bis 3, **dadurch gekennzeichnet, dass** ein mit n Isocyanatgruppen terminiertes lineares oder verzweigtes Polyurethanpolymer (PU1) der Formel Y¹[NCO]ₙ mit einem Bisphenol der Formel (IV) 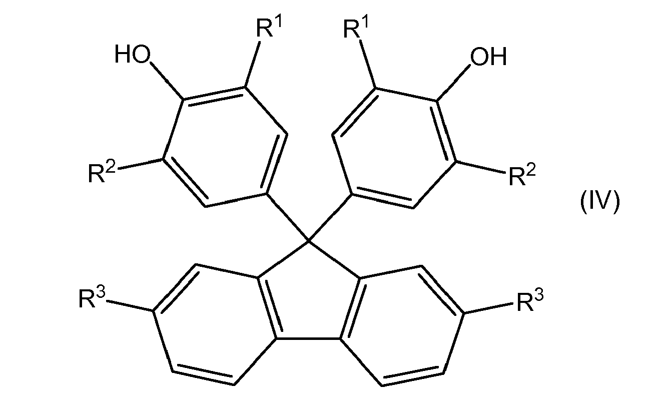 in einem Verhältnis der Anzahl phenolischen Gruppen zu Anzahl NCO-Gruppen von 2 oder grösser als 2, insbesondere zwischen 2 und 2.5, umgesetzt wird.

8. Verfahren der Herstellung eines Epoxidgruppen aufweisenden Schlagzähigkeitsmodifikators gemäss einem der Ansprüche 4 bis 6, **dadurch gekennzeichnet, dass** ein Schlagzähigkeitsmodifikator der Formel (I) gemäss einem der Ansprüche 1 bis 3 mit einem Diglycidylether der Formel (V) 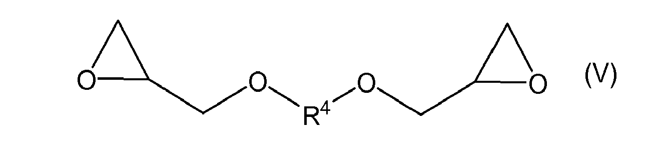 in einem Verhältnis der Anzahl Glycidyl-Gruppen zu Anzahl phenolischer Gruppen von 2 oder grösser als 2, insbesondere zwischen 2 und 10, bevorzugt zwischen 2.1 und 8, umgesetzt wird.

9. Zusammensetzung umfassend
- mindestens ein Epoxid-Flüssigharz oder Epoxid-Festharz **(A)**;
- mindestens ein Schlagzähigkeitsmodifikator der Formel (I) oder (11) gemäss einem der Ansprüche 1 bis 6
- mindestens einen Härter **(B)** für Epoxidharze.

10. Zusammensetzung gemäss Anspruch 9, **dadurch gekennzeichnet, dass** die Zusammensetzung weiterhin mindestens einen Schlagzähigkeitsmodifikator **(SM)** umfasst, welcher verschieden vom Schlagzähigkeitsmodifikator gemäss einem der Ansprüche 1 bis 6, ist.

11. Zusammensetzung gemäss Anspruch 10, **dadurch gekennzeichnet, dass** der weitere Schlagzähigkeitsmodifikator **(SM)** ein Epoxidgruppenden aufweisender Schlagzähigkeitsmodifikator der Formel (VI) ist 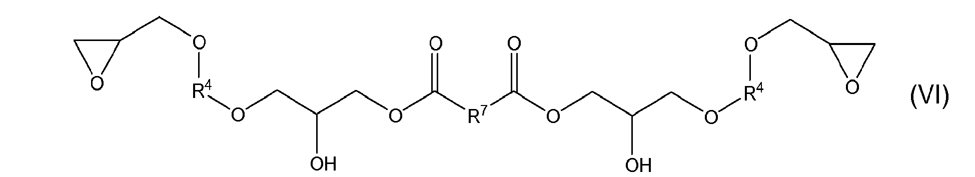 wobei
R⁴ für einen zweiwertigen aliphatischen oder einkernigen aromatischen oder einen zweikernigen aromatischen Rest steht; R⁷ für einen zweiwertigen Rest eines Carboxylgruppen-terminierten Butadien/Acrylonitril-Copolymers **(CTBN)** nach Entfernung der terminalen Carboxylgruppen steht.

12. Zusammensetzung gemäss Anspruch 11, **dadurch gekennzeichnet, dass** R⁷ für einen zweiwertigen Rest der Formel (VI') steht 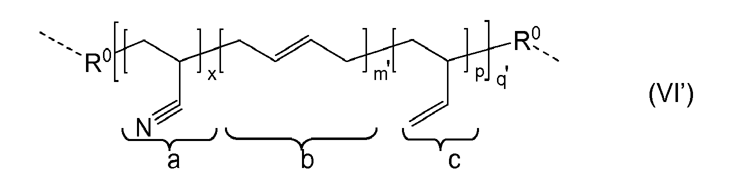 wobei R⁰ für einen linearen oder verzweigten Alkylenrest mit 1 bis 6 C-Atomen, insbesondere mit 5 C-Atomen, welcher gegebenenfalls mit ungesättigten Gruppen substituiert ist, insbesondere für einen Rest der Formel (VI-a) steht; 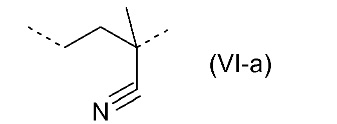 wobei der Index q' für einen Wert zwischen 40 und 100, insbesondere zwischen 50 und 90, steht; x=0.05-0.3, m'=0.5-0.8, p=0.1 -0.2;
mit der Massgabe, dass die Summe von x, m' und p gleich 1 ist, wobei die Bezeichnungen b und c die Strukturelemente, welche von Butadien stammen und a das Strukturelement, welches von Acrylonitril stammt, darstellen
und wobei die gestrichelten Linien die Anbindungsstellen darstellen.

13. Zusammensetzung gemäss einem der Ansprüche 9 bis 12, **dadurch gekennzeichnet, dass** der Härter **(B)** für Epoxidharze, ein Härter **(B-1)** für Epoxidharze ist, welcher durch erhöhte Temperatur aktiviert wird.

14. Ausgehärtete Zusammensetzung erhalten aus einer Zusammensetzung gemäss einem der Ansprüche 9 bis 12, durch Mischen des Härters **(B)** für Epoxidharze mit dem Epoxid-Flüssigharz oder Epoxid-Festharz **(A)** und dem Schlagzähigkeitsmodifikator.

15. Ausgehärtete Zusammensetzung erhalten aus der Erhitzung einer Zusammensetzung gemäss Anspruch 13 auf eine Temperatur, welche über der Hitzeaktivierung des thermisch aktivierbaren Härters **(B-1)**liegt.

16. Verwendung eines Schlagzähigkeitsmodifikators gemäss einem der Ansprüche 1 bis 6 zur Erhöhung der Schlagzähigkeit einer Epoxidharzmatrix.

17. Verbundkörper erhalten aus einem Verkleben von mindestens zwei Substraten mittels
entweder
einer gemischten Zusammensetzung, wobei die gemischte Zusammensetzung durch Mischung des Härters **(B)** für Epoxidharze mit dem Epoxid-Flüssigharz oder Epoxid-Festharz **(A)** und dem Schlagzähigkeitsmodifikator aus einer Zusammensetzung gemäss einem der Ansprüche 9 bis 12 erhalten wurde,
oder
einer Zusammensetzung gemäss Anspruch 13 und einem Erhitzen der Zusammensetzung auf eine Temperatur, welche über der Hitzeaktivierung des thermisch aktivierbaren Härters (B-1) liegt.
